## Europäisches Patentamt

## European Patent Office

## Office européen des brevets

(11) Veröffentlichungsnummer: **0 088 405**
**B1**

(12) # EUROPÄISCHE PATENTSCHRIFT

(45) Veröffentlichungstag der Patentschrift:
04.02.87

(51) Int. Cl.⁴: **C 11 B 11/00**, C 10 G 73/00

(21) Anmeldenummer: **83102158.9**

(22) Anmeldetag: **04.03.83**

(54) **Verfahren zur extrakiven Gewinnung von hochwertigen natürlichen Wachsen.**

(30) Priorität: **04.03.82 DE 3207914**

(43) Veröffentlichungstag der Anmeldung:
**14.09.83 Patentblatt 83/37**

(45) Bekanntmachung des Hinweises auf die Patenterteilung:
**04.02.87 Patentblatt 87/6**

(84) Benannte Vertragsstaaten:
**AT BE CH DE FR GB IT LI NL**

(56) Entgegenhaltungen:
DE-A-2 843 920
FR-A-1 390 751

**RECENT DEVELOPMENTS SEPARATION SCIENCE,
Nr. 3, Teil A, 1977, Seiten 171-193, C.A. IRANI et al.:
"Separations using supercritical gases"**

(73) Patentinhaber: **SKW Trostberg Aktiengesellschaft,
Dr.- Albert- Frank- Strasse 32 Postfach 1150/1160,
D-8223 Trostberg (DE)**

(72) Erfinder: **Stahl, Egon, Prof.Dr.Dr.h.c., Auf den
Hütten 25, D-6600 Saarbrücken- Scheidt (DE)**
Erfinder: **Quirin, Karl- Werner, Dr.- Prior- Strasse
48, D-6638 Dillingen (DE)**

(74) Vertreter: **Weickmann, Heinrich, Dipl.- Ing.,
Patentanwälte Dipl.- Ing. H.Weickmann Dipl.-
Phys.Dr. K.Fincke Dipl.- Ing. F.A.Weickmann
Dipl.- Chem. B. Huber Dr.- Ing. H. Liska Dipl.-
Phys.Dr. J. Prechtel Postfach 860820, D-8000
München 86 (DE)**

## Beschreibung

Gegenstand der Erfindung ist ein Verfahren zur extraktiven Gewinnung von hochwertigen natürlichen Wachsen, mit Ausnahme von Lanolin, aus fossilem und/oder nachwachsendem, pflanzlichem und/oder tierischem Ausgangsmaterial.

Wachse sind kompliziert aufgebaute, nur in seltenen Fällen völlig durchanalysierte Gemische vieler Verbindungen. Im Rahmen der vorliegenden Erfindung umfaßt der Begriff "Wachs" Gemische, die vorzugsweise aus den Abkömmlingen langkettiger Kohlenwasserstoffe mit verschiedenen funktionellen Gruppen, insbesondere aus den Estern höhermolekularer, meist linearer Carbonsäuren oder Hydroxycarbonsäuren mit höhermolekularen, meist linearenaliphatischen Alkoholen aber auch Sterolen bestehen. Die Ausgangsmaterialien für diese Wachse sind fossile Rohstoffe sowie insbesondere nachwachsende Naturprodukte, welche die durch pflanzlichen oder tierischen Stoffwechsel gebildeten Wachse enthalten.

Bei den herkömmlichen Gewinnungsverfahren, die üblicherweise eine Extraktion mit einem organischen Lösungsmittel, wie chlorierten Kohlenwasserstoffen, Benzinfraktioren und dgl., umfassen, fallen in überwiegendem Maße Rohprodukte an, die oft unerwünschte Beimengungen enthalten, farblich braun bis fettgrau erscheinen und nachteilige sensorische Eigenschaften besitzen.

Da jedoch Wachsprodukte in großem Umfang in der chemischpharmazeutischen und kosmetischen Industrie als Salbengrundlagen, Suppositorienmassen, als Glanzmittel bei der Herstellung von Dragees usw., in der chemischkosmetischen Industrie als Grundstoff für die Herstellung von Brillantine, Hautcremes, Lippenstiften, Badeölen usw. und in der Nahrungsmittelindustrie als Käsewachs, für Wachsüberzüge auf Früchten usw. Verwendung finden, werden an Wachse für diese Anwendungszwecke höchste Anforderungen gestellt, insbesondere hinsichtlich ihrer Verträglichkeit, ihrer physiologischen Unbedenklichkeit und ihrer geruchlichen und geschmacklichen Eigenschaften.

Bislang wurde durch arbeitsaufwendige, Energie verbrauchende und die Umwelt belastende Reinigungsprozesse wie Verkochen mit Aktivkohle und Bleicherde und nachfolgende Filtration, durch Umsetzen mit Peroxiden, durch Waschen mit Säuren und Laugen, durch Extraktion mit bestimmten Lösungsmittelgemischen und dgl. versucht, die nach den herkömmlichen Verfahren erhaltenen Rohwachse in eine hochwertigere, gebrauchsfertige Form zu überführen. Diese herkömmlichen Verfahren machen nicht nur einen zusätzlichen energieintensiven Trocknungsprozeß erforderlich, sondern leiden an dem Nachteil, daß stets Lösungsmittelreste oder chemisch aggressive Stoffe im Wachsrückstand verbleiben, die nicht oder nur mit großem Aufwand wieder vollständig entfernt werden können.

Es sind bereits Verfahren bekannt, bei denen durch die Anwendung von Gasen bei überkritischen Bedingungen eine Extraktion von Inhaltsstoffen natürlicher Rohprodukte bewirkt wird. So werden gemäß der DE-C- 21 27 611 Gewürzextrakte mit natürlicher Zusammensetzung durch Extraktion mit Gasen unter überkritischen Bedingungen gewonnen. Die DE-C- 27 09 033 beschreibt ein Verfahren zur Extraktion von Kamille mit überkritischen Gasen. Diese und andere Verfahren sind insbesondere darauf abgestellt, lipophile Inhaltsstoffe, bevorzugt ätherische Öle, mit an sich hohem Dampfdruck und guter Löslichkeit zu gewinnen. Weiterhin beschreibt die DE-A- 21 27 596 ein Verfahren zur Gewinnung von pflanzlichen fetten Ölen, bei denen das Fett mit überkritischen Gasen bevorzugt aus Samen als Rohstoff extrahiert wird. Die DE-A- 28 43 920 weist die solchermaßen gewonnenen fetten Öle als Rohöle aus und schlägt eine weitere Behandlung derselben mit überkritischen Gasen zum Zweck ihrer Raffinierung und Fraktionierung vor. Weiterhin offenbart die DE-C- 23 32 038 ein Verfahren zur Desodorierung von Fetten und Ölen mit überkritischen Gasen.

Irani et al (Recent Development Separation Science (1977), 3 (Part A), S. 187) beschreiben die Extraktion von Lanolin aus Wolle mit Propan bzw. einem binären Gasgemisch aus Propan/Propylen unter überkritischen Bedingungen.

Lanolin ist zwar als Wachse klassifiziert, es enthält aber freie Alkohole und Cholesterin, die ihm hydrophile Eigenschaften erteilen.

Der einschlägigen Literatur ist jedoch kein Beispiel oder Hinweis zu entnehmen, daß andere Wachse den Verfahren der Extraktion oder Raffination mittels Gasen unter überkritischen Bedingungen zugänglich sind. Dies ist nicht weiter verwunderlich, da diese zum Teil schlechte Löslichkeit dieser Stoffklasse in klassischen lipophilen Lösungsmitteln aus der Literatur hinreichend bekannt ist.

Es hat sich nunmehr überraschenderweise gezeigt, daß es mit Hilfe einer Extraktion mit $CO_2$-Gas bei überkritischen Bedingungen möglich ist, Wachse aus Rohprodukten zu extrahieren und in einem einfachen Verfahrensschritt hochwertige raffinierte Produkte mit überraschend großer Reinheit zu gewinnen.

Gegenstand der Erfindung ist daher das Verfahren gemäß Hauptanspruch.

Die Unteransprüche betreffen besonders bevorzugte Ausführungsformen dieses Erfindungsgegenstandes.

Die Erfindung betrifft somit ein Verfahren zur extraktiven Gewinnung von hochwertigen natürlichen Wachsen, mit Ausnahme von Lanolin, aus fossilem und/oder nachwachsendem, pflanzlichem und/oder tierischem Ausgangsmaterial, welches dadurch gekennzeichnet ist, daß man das Ausgangsmaterial in einer Extraktionsstufe mit $CO_2$-Gas bei einem Druck von 200 bis 900 bar (20 bis 90 MPa) und einer Temperatur von 40° bis 100°C extrahiert, das extrakthaltige Gas in einer Abscheidungsstufe durch Drucksenkung und/oder Temperaturänderung entmischt, den Extrakt absatzweise oder kontinuierlich abzieht und das abgetrennte Gas wieder in die Extraktionsstufe zurückführt.

Bei dem erfindungsgemäßen Verfahren verwendet man als Ausgangsmaterial die fossilen, pflanzlichen oder tierischen Rohprodukte, die das gewünschte Wachs enthalten. Statt das Ausgangsmaterial direkt einzusetzen, ist es nach einer bevorzugten Ausführungsform der Erfindung auch möglich, dieses zunächst einer mechanischen Vorbehandlung zum Zwecke einer möglichst raschen und erschöpfenden Wachsgewinnung zu unterwerfen, beispielsweise durch Zerkleinern, Vermahlen und dgl. mehr. Es ist natürlich auch möglich, den Anteil der enthaltenen Wachssubstanzen durch einfache Vorbehandlung des Ausgangsmaterials in an sich bekannter Weise anzureichern und dann das in dieser Weise angereicherte Produkt der beanspruchten Extraktionsbehandlung zu unterwerfen. Dabei ist es auch möglich, mit Wachs angereicherte Rückstände und Fraktionen als Ausgangsmaterial zu verwenden, die im Verlaufe eines Verarbeitungsprozesses zur Gewinnung anderer Rohstoffe, wie beispielsweise Rohrzucker, Schafwolle etc., als Nebenprodukte anfallen. Weiterhin können auch die bei der üblichen Wachsgewinnung und -Veredlung anfallenden Preßrückstände, Filterrückstände und dgl., die nicht mehr wirtschaftlich weiterverarbeitet werden können und/oder nur noch minderwertige Produkte ergeben, mit Vorteil dem erfindungsgemäßen Extraktionsverfahren unterworfen werden.

Bei dem erfindungsgemäßen Verfahren setzt man als Extraktionsmittel das ungefährlich zu handhabende, umweltfreundliche und kostengünstige Kohlendioxid ein.

Gemäß einer weiteren bevorzugten Ausführungsform der Erfindung kann man durch mehrstufige Führung der Extraktion und/oder der Abscheidung eine Fraktionierung des extrahierten Wachses bewirken. So kann man beispielsweise bei der Extraktion durch eine Druck- und/oder Temperaturänderung eine schrittweise Erhöhung der Dichte des Extraktionsmittels und damit seines Lösungsvermögens bewirken und/oder bei der Abscheidung durch eine Druck- und/oder Temperaturänderung eine stufenweise Erniedrigung der Dichte des Extraktionsmittels und damit seines Lösungsvermögens für die extrahierten Bestandteile erreichen. Durch diese Maßnahmen erfolgt eine fraktionierte Extraktion bzw. fraktionierte Abscheidung des Wachses. Diese Fraktionierung kann erfindungsgemäß noch dadurch weiter gesteigert werden, daß man bei diskontinuierlicher Verfahrensführung den Extrakt der Abscheidungsstufe portionsweise in verschiedenen Zeitabständen entnimmt und so beispielsweise einen "Vorlauf" abtrennt.

Die in dieser Weise erreichte "Fraktionierung" ist dabei nicht unbedingt so zu verstehen, daß eine weitgehende Zerlegung des extrahierten Stoffgemisches in seine Einzelbestandteile angestrebt wird, da die Wachseigenschaften, soweit vorhanden, gerade aus dem Gemenge der Bestandteile resultieren und einzelne Komponenten diese Eigenschaften nicht mehr besitzen. Die erfindungsgemäß bevorzugte Arbeitsweise der Fraktionierung hat jedoch den Zweck, verschiedene störende Begleitstoffe abzutrennen, sowie farblich und sensorisch noch weiter verbesserte Produkte unter weitgehender Beibehaltung der natürlichen Zusammensetzung zu gewinnen.

Die erfindungsgemäße Verfahrensweise kann durch entsprechende Auslegung der eingesetzten Vorrichtungen kontinuierlich oder diskontinuierlich geführt werden. So können auch die Extrakte während der Extraktion kontinuierlich oder diskontinuierlich oder auch erst nach Beendigung der Extraktion abgeführt werden. Weiterhin ist es möglich, in an sich bekannter Art und Weise durch Umschalten von parallel geschalteten Abscheidern den Extrakt wechselweise zu entnehmen.

Ein weiterer Vorteil der beanspruchten Verfahrensweise ist darin zu sehen, daß das Extraktionsmittel nach dem Abscheidungsvorgang ohne zusätzliche arbeitsaufwendige und energie-intensive Reinigung im Sinne eines Kreisprozesses wieder verwendet werden kann, indem es erneut in die Extraktionsstufe eingeführt wird. Zu diesem Zweck ist es lediglich notwendig, das Gas auf die in der Extraktionsstufe herrschenden Druck- und Temperaturbedingungen zu bringen.

Der vom eingesetzten Ausgangsmaterial verbleibende Extraktionsrückstand kann bei diskontinuierlichem Betrieb nach Beendigung des Extraktionsvorgangs der Extraktionsstufe entnommen und erneuert werden. Auch hier besteht die Möglichkeit, das vorgelegte Ausgangsmaterial ohne Unterbrechung des Verfahrensablaufs durch wechselweises Umschalten von parallel eingebauten Extraktionsbehältern während des Verfahrensablaufs zu erneuern. Weiterhin ist es möglich, die Extraktionsbehälter in an sich bekannter Weise hintereinander zu schalten, so daß die Möglichkeit besteht, die Extraktion im Gegenstrom auszuführen, wodurch sich eine gleichbleibend gute Ausnutzung des Extraktionsmittels gewährleisten läßt. In der Extraktionsstufe wird das Ausgangsmaterial mit dem Gas behandelt, welches unter bezüglich Druck und Temperatur überkritischen Bedingungen vorliegt. Zwar ist eine Extraktion bei unterkritischen Temperaturen mit verflüssigten Gasen prinzipiell möglich, jedoch ist insbesondere im hohen Druckbereich das Lösungsvermögen des im überkritischen Zustand vorliegenden Gases wesentlich größer, und das Verfahren damit ökonomisch erheblich günstiger. Hierbei muß es allerdings als überraschend angesehen werden, daß es trotz dieser Extraktionsbedingungen gelingt, die kompliziert aufgebauten Wachsprodukte mit hoher Reinheit ohne Beeinträchtigung der gewünschten Eigenschaften zu gewinnen, so daß diese direkt für pharmazeutische, kosmetische und lebensmitteltechnische Zwecke verwendet werden können.

Erfindungsgemäß wird in der Extraktionsstufe bei einer Temperatur im Bereich zwischen 40° bis 100°C und noch bevorzugter bei 50° bis 80°C. Der entsprechende Druckbereich erstreckt sich von 200 bis 900 bar (20 bis 90 MPa) und noch bevorzugter von 300 bis 800 bar (30 bis 80 MPa).

Nach der Extraktionsstufe wird das extrakthaltige überkritische Gas zur Abtrennung des Extrakts in den Abscheidungsteil der Anlage überführt. Die Trennung bzw. die Entmischung von Extrakt und Extraktionsmittel erfolgt durch Änderung von Druck und/oder Temperatur, vorzugsweise durch eine Druckänderung. Für die Druckänderung des eingesetzten Kohlendioxids ist es von Vorteil, den Druck auf Werte unterhalb von 150 bar (15 MPa), vorzugsweise auf 40 bis 100 bar und insbesondere auf 50 bis 80 bar (5 bis 8 MPa) zu senken.

Für die Temperaturänderung kann je nach Umständen eine Erhöhung oder eine Erniedrigung von Vorteil sein. Keinesfalls sind jedoch Werte unterhalb der kritischen Temperatur erforderlich. Der bevorzugte Temperaturbereich liegt daher zwischen 31,4 und 100°C, insbesondere zwischen 40 und 80°C, da hierdurch gleichzeitig die Gewinnung wasserarmer Extrakte bewirkt wird, falls das eingesetzte Substrat einen nennenswerten Feuchtigkeitsgehalt besitzen sollte.

Mit Hilfe der erfindungsgemäßen Verfahrensweise gelingt es bei einer extraktiven Behandlung der Rohstoffcharge während lediglich 1 bis 10 Stunden eine nahezu quantitative Produktegewinnung zu erreichen.

Die erfindungsgemäße Verfahrensweise ermöglicht also besonders bei optimierter Verfahrensführung die kostengünstige Gewinnung hochwertiger Wachsprodukte in einem einfachen Verfahrensschritt unter vergleichsweise minimalem Einsatz von Zeit und Energie und ohne jegliche Belastung der Umwelt. Die erhaltenen Wachsextrakte können direkt der Verwendung für Pharmazeutika, Kosmetika und Lebensmitteln zugänglich gemacht werden. Besonders geeignet ist die beanspruchte Verfahrensweise zur Gewinnung von Karnaubawachs, Bienenwachs, Wollwachs, Montanwachs, Jojobawachs, Candelillawachs, Ouricurywachs, Zuckerrohrwachs, Espartograswachs, Flachswachs, Baumwollwachs, Japanwachs und Schellackwachs.

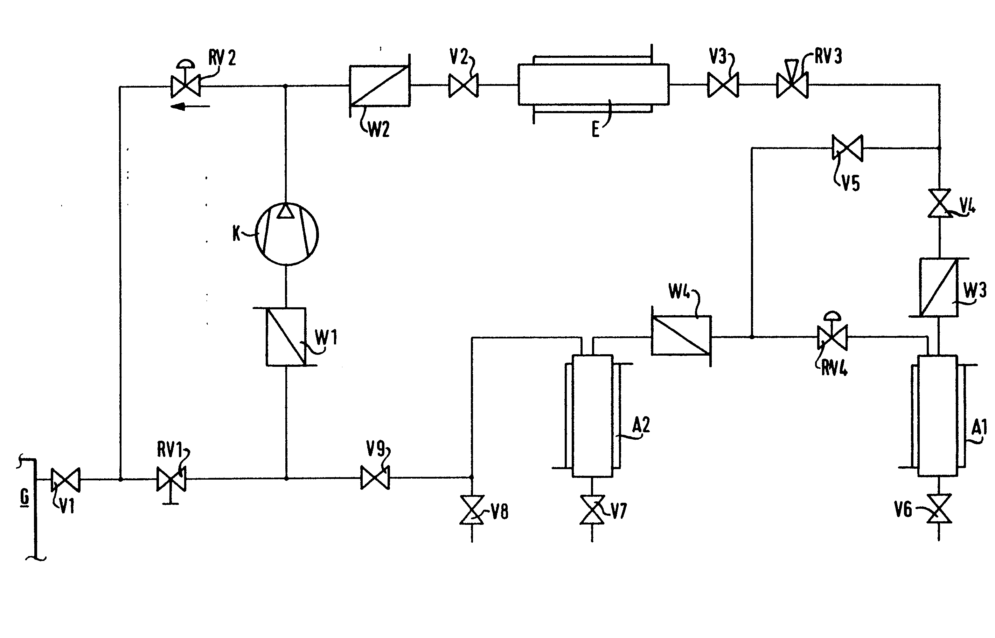

Die Erfindung sei im folgenden näher unter Bezugnahme auf die beigefügte Zeichnung erläutert.

In der Zeichnung zeigt die einzige Figur das Schema einer Extraktionsanlage, anhand derer die beanspruchte Verfahrensweise erläutert wird.

Der in der Figur dargestellte Extraktionsbehälter E wird mit dem gemahlenen Ausgangsmaterial beschickt, wonach die Anlage gegebenenfalls vor Extraktionsbeginn bei geschlossenem Ventil V9 und geöffnetem Ventil V8 mit Kohlendioxid luftfrei gespült wird. Das Extraktionsmittel wird über das Einlaßventil V1 dem Gasvorratsbehälter G entnommen und über das Regelventil RV1, das als Druckminderer ausgelegt ist und sowohl den Ansaugdruck des Verdichters K als auch den Abscheidungsdruck im Abscheider A2 festlegt, in das System eingeführt. Je nach Temperatureinstellung des Wärmeaustauschers W1 wird das Extraktionsmittel verflüssigt oder gasförmig dem Verdichter K zugeführt, der z.B. als Kompressor oder Flüssiggaspumpe ausgelegt sein kann und das zugeführte Extraktionsmittel komprimiert und fördert. Das Ventil RV2 ist bevorzugt als Überströmventil ausgeführt und besitzt die Aufgabe über eine Meß- (beispielsweise einen DMS-Druckaufnehmer) und Regel-Einrichtung (beispielsweise ein Nadelventil mit pneumatischem oder hydraulischem Antrieb) den vorgegebenen Extraktionsdruck konstant zu halten, indem es lediglich das vom Verdichter über den erwünschten Druck hinaus geförderte Gas zurückströmen läßt Damit verbunden ist die Funktion eines Sicherheitselements, das bei einer Störung im Extraktionskreislauf den Druck in der Anlage auf den eingestellten Wert begrenzt. Der Extraktionsbehälter E ist ebenso wie die beiden Abscheider A1 und A2 als thermostatisiertes Druckgefäß ausgeführt, das beispielsweise mit Hilfe eines thermostatisierten Wasser- oder Dampfmantels auf die gewünschte Temperatur gebracht werden kann. Bevor das Gas in den Extraktionsautoklaven E bzw. in die Abscheidungsbehälter A1 und A2 eintritt, wird es jeweils mit Hilfe der Wärmeaustauscher W2, W3 und W4 auf die vorgegebene Temperatur gebracht. Da der Wärmeaustauscher W2 in vielen Fällen Kompressionswärme abführen muß, während die Wärmeaustauscher W3 und/oder W4 meist durch Wärmezufuhr den Temperaturabfall beim Entspannen ausgleichen sollen, ist der Verfahrensablauf energetisch besonders günstig, wenn die Wärmeaustauscher W3 und W4 zum Beispiel über eine Wärmepumpe mit dem Wärmeaustauscher W2 verbunden werden.

Nachdem in der angegebenen Weise die Extraktionsparameter Druck und Temperatur eingestellt sind, durchströmt das überkritische Extraktionsmittel den gefüllten Extraktionsbehälter E, tritt dabei in innigen Kontakt mit dem Ausgangsmaterial und belädt sich mit dessen Inhaltsstoffen. Das extrakthaltige Gas verläßt den Extraktionsbehälter E über eine Filtereinrichtung, die das mechanische Mitreißen kleiner Teilchen verhindert, und wird an dem Dosierventil RV3 auf einem Druck entspannt, bei dem sich der Extrakt ganz oder teilweise aus der Gasphase abscheidet. Bei einstufiger Abscheidung bleibt das Ventil V4 geschlossen und das Gas gelangt über den Wärmeaustauscher W4 direkt in den Abscheider A2. Für den Fall einer zwei- oder mehrstufigen Abscheidung bleibt das Ventil V5 geschlossen und das Gemisch aus beladenem überkritischem Gas und teilweise ausgeschiedenem Extrakt gelangt über den Wärmeaustauscher W3 zunächst in den Abscheider A1, in dem der entmischte Teil des Extrakts zurückbleibt. Das den restlichen Extrakt als gesättigte Lösung enthaltende überkritische Gas wird am Überströmventil RV4, das den Druck im Abscheidungsbehälter A1 bestimmt, weiter entspannt und gelangt über den Wärmeaustauscher W4 in den Abscheider A2. Hierbei entmischt sich der restliche im Gas gelöste Anteil des Extrakts und bleibt im Behälter A2 zurück. Während das nunmehr unbeladene regenerierte Gas über den Wärmeaustauscher W1 erneut dem Verdichter K zugeführt wird und damit den Kreislauf schließt, kann der Extrakt noch während der Extraktion über die Ventile V6 und V7 oder aber nach Beendigung des Verfahrenablaufs durch Öffnen der Abscheider entnommen werden.

Die folgenden Beispiele, die unter Anwendung einer Pilotanlage des in der Zeichnung dargestellten Aufbaus durchgeführt wurden, dienen der weiteren Erläuterung der Erfindung.

**Beispiel 1**

In einer Schneidmühle pulverisiert man 50g fettgrau bis schwarz erscheinendes Carnaubawachs-Rohprodukt während 30 Sekunden. Man überführt das Material in den Extraktionsbehälter und extrahiert es während 8 Stunden mit Kohlendioxid unter überkritischen Bedingungen bei einem Druck von 600 bar (60 MPa) und einer Temperatur von 60° C. Man bewirkt die Abscheidung des Extrakts einstufig bei einem Druck von 60 bar (6 MPa) und einer Temperatur von 60° C.

Man erhält 44g eines voluminösen, reinweißen Pulvers von schneeartig-flockiger Konsistenz. Stellt man der extrahierten Substanz in der Abscheidungsstufe genügend Raum zur Verfügung, so besitzt das gewonnene Pulver eine Schüttdichte von 32 g/l. Im Vergleich zu dem gemahlenen Rohprodukt, das eine Schüttdichte von ca. 600 g/l aufweist, bedeutet dies eine Volumenzunahme um den Faktor 19. Der krautige Geruch der Ausgangssubstanz ist beim Extrakt praktisch nicht mehr vorhanden.

**Beispiel 2**

Man pulverisiert 100g rohes, bräunliches Bienenwachs aus dem Kongo unter Kühlen in einer Schneidmühle und behandelt es in der beschriebenen Extraktionsanlage während 6 Stunden mit Kohlendioxid bei einem Druck von 400 bar (40 MPa) und einer Temperatur von 50° C. Die Abscheidung des Extrakts bewirkt man durch Entspannen auf einen Druck von 60 bar (6 MPa) und eine Temperatur von 40° C.

Nach einer Stunde kann mann dem Abscheider 90g eines Extraktes mit hellem, elfenbeinfarbenem Aussehen, mildem, honigartigem Geruch und bröckelig-wachsartiger Konsistenz entnehmen. Nach weiteren 5 Stunden erhält man 77g eines restlichen Extrakts, der eine reinweiße Farbe aufweist, praktisch geruchlos ist und eine mehr trocken-pulvrige Konsistenz besitzt. Während der Tropfpunkt des anfangs entnommenen Extrakts gegenüber dem eingesetzten Substrat etwas erniedrigt ist, liegt der Tropfpunkt der Hauptfraktion mit 65 bis 66° C um etwa 2° C über demjenigen des Rohprodukts.

**Beispiel 3**

Man trägt 60g Rohwollwachs in Form einer braunen Masse mit Bockgeruch auf ein inertes Trägermaterial mit großer Oberfläche auf und überführt dieses in den Extraktionsautoklaven. Dann bewirkt man die Extraktion während 6 Stunden mit überkritischem Kohlendioxid bei einem Druck von 400 bar (40 MPa) und einer Temperatur von 40° C. Zur Abscheidung senkt man den Druck bei einer Temperatur von 40° C auf 50 bar (5 MPa).

Beim Öffnen des Abscheiders ergibt sich zunächst eine weiße, schlagsahneartigschaumige Masse, die durch Stehenlassen an der Luft oder Entgasen die normale wachsartigviskose Konsistenz wiedererlangt. Nach einer Extraktionsdauer von 2 Stunden erhält man 24g eines gelblichen Produktes mit schwachem Geruch, während man nach weiteren 4 Stunden 32g eines praktisch geruchlosen, nahezu farblosen Produktes erhält. Bei Erhöhung der Abscheidungstemperatur deutlich über den Tropfpunkt, beispielsweise auf 70° C, kann das Wollwachs in flüssiger Form über das fußseitige Ventil des Abscheiders entnommen werden.

**Beispiel 4**

Man pulverisiert zunächst 80g dunkelbraun erscheinendes, rohes Montanwachs und extrahiert es dann während sieben Stunden mit Kohlendioxid bei einem Druck von 700 bar (70 MPa) und einer Temperatur von 60° C. Man bewirkt die Abscheidung bei einem Druck von 70 bar (7 MPa) und einer Temperatur von 50° C.

Man erhält 77g einer zunächst orange-gelb, dann beigefarbenen, spröden, bröckeligen Substanz, die praktisch geruchlos ist, während das gepulverte Rohprodukt einen unangenehm terpentinartig öligen Geruch besitzt.

**Beispiel 5**

Man extrahiert 500g gemahlene Jojobanüsse während fünf Stunden mit überkritischem Kohlendioxid bei einem Druck von 400 bar (40 MPa) und einer Temperatur von 40°C. Die Abscheidung des Extrakts bewirkt man in zwei Stufen. Im Abscheider A1 entspannt man die Gasphase auf 100 bar (10 MPa), während man sie im Abscheider A2 auf 60 bar (6 MPa) bei jeweils 40°C entspannt.

Im Abscheider A1 erhält man 205g eines hellgelben, geruchlosen und klaren, bei Raumtemperatur flüssigen Wachses mit einer Säurezahl von 0,2. Dem Abscheider A2 entnimmt man 20g eines flüssigen, fast farblosen Wachses mit einer Säurezahl von 2,2.

Das gemahlene Ausgangsmaterial, das vor der Extraktion aus teils zusammenhaftenden, wachsgetränkten Teilchen von dunklem Aussehen besteht, fällt nach der Extraktion als hellgraues, leichtes, trockenes und bewegliches Pulver in dem Abscheidungsbehälter an.

**Beispiel 6**

Zunächst werden 1000g zerkleinerte Jojobanüsse kalt gepreßt. Dabei erhält man 295g eines hellgelben, leicht getrübten, flüssigen Wachses. Der Preßkuchen wird pulverisiert und während 7 Stunden mit überkritischem Kohlendioxid bei einem Druck von 350 bar (35 MPa) und einer Temperatur von 40°C extrahiert. Zur Abscheidung des Extraktes stellt man bei 40°C einen Druck von 50 bar (5 MPa) ein.

Man erhält 200g eines hellgelben, durch geringen Wassergehalt leicht getrübten, flüssigen Wachses, das durch Zentrifugieren rasch geklärt werden kann. Das Material besitzt die folgenden Analysenwerte: Gardner-Farbe: 5,5; d (20/20) = 0,8720; n (20/20) = 1,4657; Säurezahl = 0,3; Verseifungszahl = 90; Jodzahl = 80.

**Patentansprüche**

1. Verfahren zur extraktiven Gewinnung von hochwertigen natürlichen Wachsen, mit Ausnahme von Lanolin, aus fossilem und/oder nachwachsendem, pflanzlichem und/oder tierischem Ausgangsmaterial, dadurch gekennzeichnet, daß man das Ausgangsmaterial in einer Extraktionsstufe mit $CO_2$-Gas bei einem Druck von 200 bis 900 bar (20 bis 90 MPa) und einer Temperatur von 40° bis 100°C extrahiert, das extrakthaltige Gas in einer Abscheidungsstufe durch Drucksenkung und/oder Temperaturänderung entmischt, den Extrakt absatzweise oder kontinuierlich abzieht und das abgetrennte Gas wieder in die Extraktionsstufe zurückführt.

2. Verfahren nach Anspruch 1, dadurch gekennzeichnet, daß man das Ausgangsmaterial direkt, nach mechanischer Vorbehandlung oder nach An- oder Abreicherung der enthaltenen Wachssubstanzen einsetzt.

3. Verfahren nach Anspruch 1 oder 2, dadurch gekennzeichnet, daß man durch mehrstufige Führung der Extraktion und/oder der Abscheidung eine Fraktionierung des extrahierten Wachses bewirkt.

4. Verfahren nach Anspruch 3, dadurch gekennzeichnet, daß man bei der Extraktion durch Druck- und/oder Temperaturänderung eine schrittweise Erhöhung der Dichte des Extraktionsmittels und/oder bei der Abscheidung durch Druck und/oder Temperaturänderung eine schrittweise Erniedrigung der Dichte des Extraktionsmittels bewirkt.

5. Verfahren nach den Ansprüchen 3 oder 4, dadurch gekennzeichnet, daß man bei der Extraktion und/oder der Abscheidung zwei oder mehr Druckstufen anwendet.

6. Verfahren nach einem der vorhergehenden Ansprüche, dadurch gekennzeichnet, daß man in der Extraktionsstufe bei einem Druck von 300 bis 800 bar (30 bis 80 MPa) arbeitet.

7. Verfahren nach einem der vorhergehenden Ansprüche, dadurch gekennzeichnet, daß man in der Extraktionsstufe bei einer Temperatur von 50°C bis 80°C arbeitet.

8. Verfahren nach einem der vorhergehenden Ansprüche, dadurch gekennzeichnet, daß man in der Abscheidungsstufe bei einem Druck von 40 bis 150 bar (4 bis 15 MPa), insbesondere von 50 bis 80 bar (5 bis 8 MPa) arbeitet.

9. Verfahren nach einem der vorhergehenden Ansprüche, dadurch gekennzeichnet, daß man in der Abscheidungsstufe bei einer Temperatur zwischen 31,4°C und 100°C, insbesondere zwischen 40°C und 80°C arbeitet.

**Claims**

1. Process for the extractive obtaining of high quality natural waxes, with the exception of lanolin, from fossil and/or freshly grown vegetable and/or animal starting materials, characterised in that one extracts the starting material in an extraction step with $CO_2$ gas at a pressure of 200 to 900 bar (20 to 90 MPa) and a temperature of 40° to 100°C., separates the extractcontaining gas in a separation step by lowering the pressure and/or changing the temperature, removes the extract batchwise or continuously and again returns the separated gas to the extraction step.

2. Process according to claim 1, characterised in that one uses the starting material directly, after mechanical pretreatment or after an enrichment or depletion of the contained wax substances.

3. Process according to claim 1 or 2, characterised in that one brings about a fractionation of the extracted wax by a multistage carrying out of the extraction and/or of the separation.

4. Process according to claim 3, characterised in that, in the case of the extraction, by means of pressure and/or temperature change, one brings about a stepwise increase of the density of the extraction agent and/or in the case of the separation, by means of a pressure and/or temperature change, a stepwise lowering of the density of the extraction agent.

5. Process according to claim 3 or 4, characterised in that one uses two or more pressure stages in the extraction and/or in the separation.

6. Process according to one of the preceding claims, characterised in that one works in the extraction stage at a pressure of from 300 to 800 bar (30 to 80 MPa).

7. Process according to one of the preceding claims, characterised in that in the extraction stage one works at a temperature of 50°C. to 80°C.

8. Process according to one of the preceding claims, characterised in that in the separation stage one works at a pressure of 40 to 150 bar (4 to 15 MPa), especially of 50 to 80 bar (5 to 8 MPa).

9. Process according to one of the preceding claims, characterised in that in the extraction step one works at a temperature between 31.4°C. and 100°C., especially between 40°C. and 180°C.

## Revendications

1. Procédé d'extraction de cires naturelles de haute qualité, à l'exception de la lanoline, à partir d'un matériau de base fossilé et/ou à post-croissance, d'origine végétale et/ou animale, procédé caractérisé par le fait que le matériau de base est soumis à extraction dans un étage extracteur, avec du $CO_2$ gazeux, sous une pression de 200 à 900 bar (20 à 90 MPa) et à une température de 40° à 100° C; le gaz renfermant l'extrait est dissocié dans un étage séparateur, par chute de pression et/ou variation de température; l'extrait est évacué par paliers ou en continu; et le gaz séparé est réintroduit dans l'étage extracteur.

2. Procédé sélon la revendication 1, caractérisé par le fait qu'on utilise le matériau de base directement, après traitement mécanique préalable ou après enrichissement ou appauvrissement des substances renfermées du type cires.

3. Procédé selon la revendication 1 ou 2, caractérisé par le fait qu'on provoque un fractionnement de la cire extraite, par conduité à plusieurs paliers de l'extraction et/ou de la séparation.

4. Procédé selon la revendication 3, caractérisé par le fait qu'on provoque lors de l'extraction, par variation de pression et/ou de température, un accroissement progressif de la densité du moyen extracteur, et/ou lors de la séparation, par variation de pression et/ou de température, une diminution progressive de la densité du moyen extracteur.

5. Procédé selon les revendications 3 ou 4, caractérisé par le fait qu'on applique deux étages de pression ou plus lors de l'extraction et/ou de la séparation.

6. Procédé selon l'une des revendications précédentes, caractérisé par le fait qu'on opère, dans l'étage extracteur, sous une pression de 300 à 800 bar (30 à 80 MPa).

7. Procédé selon l'une des revendications précédentes, caractérisé par le fait qu'on opère, dans l'étage extracteur, à une température de 50° C à 80° C.

8. Procédé selon l'une des revendications précédentes, caractérisé par le fait qu'on opère, dans l'étage séparateur, sous une pression comprise entre 40 et 150 bar (4 à 15 MPa), en particulier entre 50 et 80 bar (5 à 8 MPa).

9. Procédé selon l'une des revendications précédentes, caractérisé par le fait qu'on opère, dans l'étage séparateur, à une température comprise entre 31,4° C et 100° C, en particulier entre 40° C et 80° C.

RV2  V2  W2  E  V3  RV3  V5  V4  W3  K  W1  W4  RV4  A1  A2  RV1  V9  V8  V7  V6  V1  G

0 088 405